# EUROPÄISCHE PATENTSCHRIFT

(11) **EP 1 566 873 B1**
(45) Veröffentlichungstag und Bekanntmachung des Hinweises auf die Patenterteilung: **13.10.2010**
(21) Anmeldenummer: 05101273.0
(22) Anmeldetag: 18.02.2005
(51) Int. Cl.: H02H 3/04, H02H 7/26, H02H 7/28

(54) **Sicherheits-Schaltungsverbund mit Ringkonzept für Steuergeräte der Leistungselektronik**
Protection circuit group with ring structure for power electronics control devices
Groupe de circuits de protection avec structure annulaire pour des appareils de commande d'électronique de puissance

(30) Priorität: 28.04.2004 DE 102004020830; 19.02.2004 DE 102004008249
(43) Veröffentlichungstag der Anmeldung: 24.08.2005
(73) Patentinhaber: Lenze Automation Gmbh, 31855 Aerzen (DE)
(72) Erfinder: Beckmann, Guido, 31863 Coppenbruegge (DE); Tieste, Karl-Dieter, 30169 Hannover (DE); Tolksdorf, Andreas, 31789 Hameln (DE); Tinebor, Manfred, 32683 Barntrup (DE); Ehlich, Martin, 32689 Kalletal (DE); Wratil, Peter, 21224 Rosengarten (DE)
(74) Vertreter: Leonhard, Frank Reimund

(56) Entgegenhaltungen:
- EP-A- 0 528 442
- EP-A- 1 148 608
- EP-A2- 1 028 360
- DE-A1- 3 628 299
- GB-A- 2 198 001
- US-A1- 2005 001 431

## Beschreibung

Die Erfindung befasst sich mit Sicherheitsaspekten von Leistungselektronik-Geräten, welche als "Steuergeräte der Leistungselektronik" vielfach in Gebrauch sind, so beispielsweise als Frequenzumrichter oder Wechselrichter oder andere Umrichter, die zum Betreiben eines elektromotorischen Antriebs vorgesehen sind. Anwendbar ist die Erfindung auch im Umfeld der Hydraulik oder Pneumatik, vorgesehen zur Ansteuerung, oder überall dort, wo mehrere Geräte zusammen sicherheitsüberwacht werden sollen.

Oft sind elektrische, hydraulische oder pneumatische Steuerungen und Antriebe nicht nur eigenständig betrieben, sondern auch mechanisch gekoppelt. Die mechanische Kopplung, beispielsweise als Getriebe, oder ein anderer Verbund im Sinne einer elektrischen Welle, erfordert es, dass alle eigenständig angesteuerten und betriebenen Antreibe über ein übergeordnetes Sicherheitskonzept verfügen können, das ihre praktisch gleiche Sicherheitsreaktion steuert, veranlasst und überwacht. Es muß dabei vermieden werden, dass die Sicherheitsabschaltungen solcher Antriebe unterschiedlich arbeiten, gerade dann, wenn jeder Antrieb eigenständig und selbständig abgeschaltet wird, aber eine mechanische Kopplung zwischen den Antrieben besteht, die selbst nicht in der Lage ist, die Sicherheitsabschaltung von dem einen Antrieb auf den anderen Antrieb zu übertragen.

Hierfür werden heutzutage **zentrale Auswertungen** von Rückmeldungen aller Antriebe vorgesehen, welche dann - veranlasst von einem Teilnehmer - eine Abschaltung (auch) der anderen Antriebe auslöst. Beispielsweise wird ein Antrieb mit einem Sicherheitsfall detektiert, ein Sicherheitssignal löst eine Abschaltreaktion aus und meldet es an die zentrale Auswertung, ggf. auch sicherheitsüberwacht oder mehrkanalig. Diese zentrale Auswertung sorgt für ein gleiches Abschalten auch der anderen im Verbund stehenden Antriebe. Trotz dieser zentralen Schaltungsanordnung kommt es zu Verzögerungen aufgrund einer System-Zykluszeit im Bereich oberhalb 50 msec, schlimmstenfalls mehrere 100 msec, welche die Steuerung aufweist, die in der zentralen Auswertung arbeitet. Bei hochdynamischen Antrieben machen sich diese scheinbar geringen Verzögerungszeiten indes bemerkbar.

Selbst bei Antrieben, welche nicht hochdynamisch sind, also die angesprochenen Ansprechzeiten oder Verzögerungen tolerieren könnten, sind die Kosten einer gesonderten Steuerung einerseits und zum anderen die durch Verdrahtungs- und Programmieraufwand anstehenden Zusatzkosten störend.

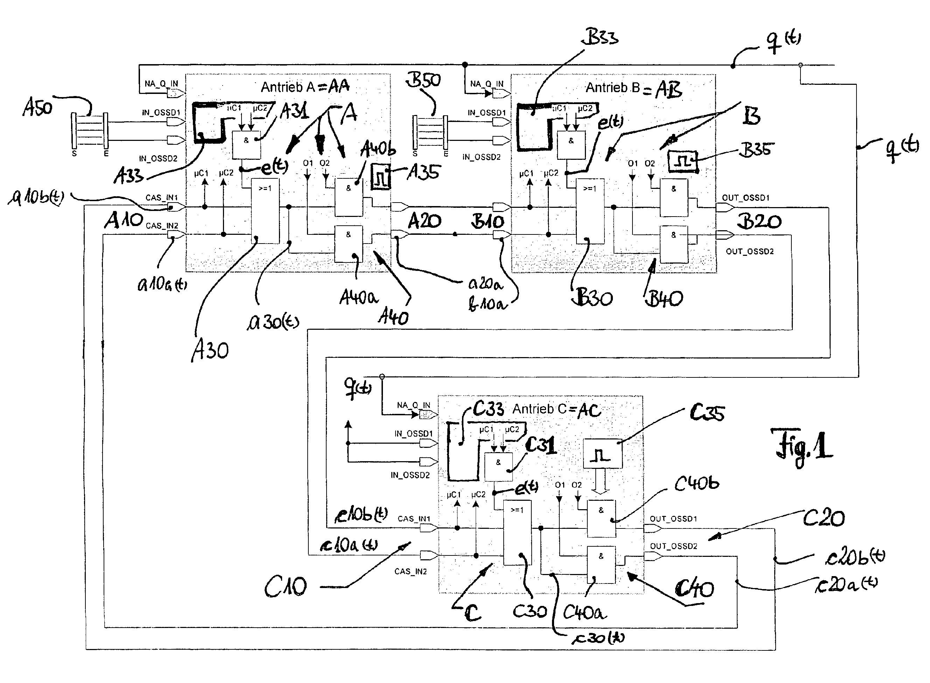

Aus der US-A 2003/225831 (Nagano et al.) ist ein programmierbares Steuergerät bekannt, welches nach beispielsweise der dortigen Figur 1 einen Ringverbund, dort 30, mit Kommunikationsschnittstellen betreibt, und dabei wird ein verdrilltes Kabelpaar zur Weiterleitung verwendet, vgl. dort Absatz [028].

Auch ein Ringverbund aus verschieden einzelnen Knoten ist dem Fachmann mit der EP 1 028 360 A1 (KUKA Roboter) zugänglich, dort insbesondere Absätze 14 und 15. Ein Ringbus wird aufgebaut, der am Eingang und Ausgang je eine serielle Schnittstelle aufweist und 8 Bit überträgt. Eine zweikanalige Ausgestaltung von Eingängen ist dort gezeigt, diese Eingänge sind aber nicht entlang der Ringstruktur, sondern solche Eingänge, welche den beiden redundanten Mikroprozessoren im Knoten zugeführt werden. Werden zwei Mikroprozessoren vorgesehen, erhält jeder Mikroprozessor einen Eingang. Diese Eingänge werden "sicherheitsrelevante" Eingänge genannt. Eine frühere Lösung findet sich in der DE 197 18 284 C1 oder US 6,385,562 B1 vom 7. Mai 2002 (KUKA Roboter). In der US-Schrift zeigt insbesondere Spalte 3, Zeilen 44 bis 57 die Funktionseinheiten mit separaten Sicherheitseinrichtungen, wobei zwei Sicherheitsrichtungen so verkoppelt sind, dass sie einen "Ringverbund" aus einer hinführenden und einer rückführenden Leitung besitzen, welche Schnittstellen als serielle Anschlüsse aufweisen (dort 7,8). Der Ring betrifft keine Ringkopplung der dortigen Sicherheitsschaltungen 6.1 bis 6.5. Mit dieser Sicherheitsschaltung ist eine verteilte Sicherheitslogik vorgesehen, bei der sämtliche erforderlichen Sicherheitsfunktionen möglich sind und eine hochauflösende Diagnose möglich erscheint. In der erstgenannten EP-Schrift war diese hoch auflösende Diagnose hin zu einer einfachen Diagnosemöglichkeit optimiert worden, und parallel sollte in jedem Knoten die von diesem Knoten empfangenen Daten verarbeitet werden, wobei sich die "parallele Verarbeitung" auf die Anzahl der mehreren Knoten bezieht, so dass jeder als solches die Daten verarbeitet, nicht aber ein Knoten mit parallelen Daten im Sinne des Begriffes gespeist wird.

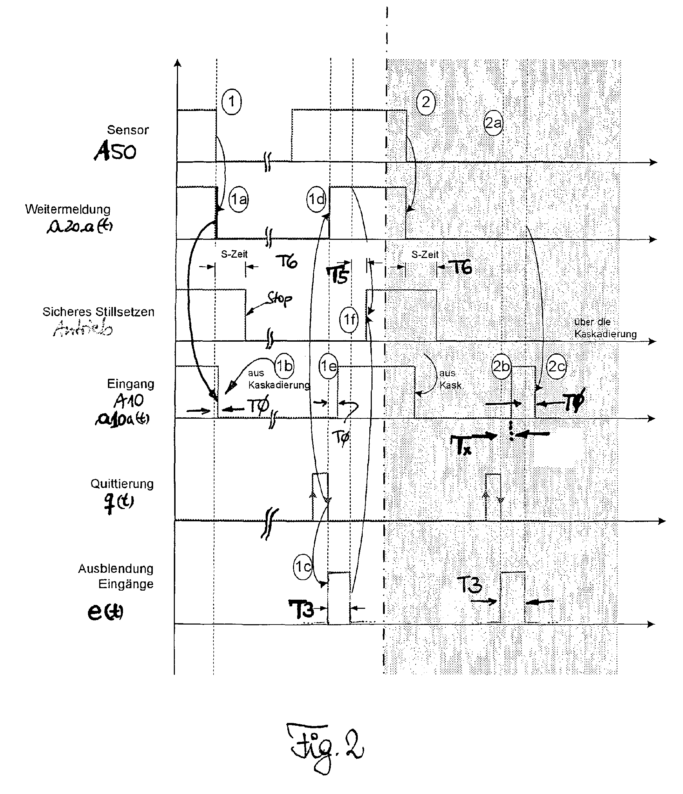

Aus der DE 36 28 299 A1 (Licentia) ist ein Ringverbund aus sicheren Rechnern bekannt. Die Ringstruktur besteht aus BUS-Strukturen (dort BUS 1 und BUS 2), welche mit BUS-Kopplern arbeiten. Die beiden Ring-BUSSE sind parallel redundant im gegenläufigen Sinn undirektional von Daten durchflossen, und je ein Kanal eines Rechners wird je einem Ring-BUS zugeordnet. Aus der DE 199 25 693 A1 (Phoenix) ist auch ein ringförmiges BUS-System bekannt, um fehlertolerante Strukturen zu bilden. Der bestmöglich ersichtliche Aufbau ist aus der dortigen Figur 2 erkennbar, vgl. auch Seite 3, Zeilen 4 bis 15. Die Ringstruktur scheint quer verlaufend einkanalig zu sein, dagegen ist die Zufuhr der Information redundant vom Prozess vorgegeben, dort Bezugszeichen 4,5. Aus der US 5,412,528 B ist eine Matrix bekannt, vgl. dort Spalte 4, Zeilen 25 bis 30. Sie besteht aus Notschaltern, welche die Schaltmatrix bilden, um die Verdrahtung zu reduzieren. Eine Ringstruktur ist dieser Schrift nicht zu entnehmen.

Die Erfindung hat deshalb **als Problemstellung,** eine Sicherheitsabschaltung in Ringstruktur so auszubilden, dass sie zuverlässiger arbeitet und dabei gleichwohl schneller anzusprechen vermag. Gegenüber einem Sternkonzept (zentrale Auswertung von Rückmeldungen vieler Geräte oder Antriebe) sollen Verdrahtungs- und Programmieraufwand reduziert werden, Sonderschaltungen weitgehend vermieden werden und die Zuverlässigkeit sowie die Flexibilität, durch Zulassung einer beliebigen Anzahl von Sicherheitsstufen, erhöht werden.

Die Erfindung löst diese umfangreiche Aufgabe durch die Realisierung eines Ringkonzeptes oder einer Ringstruktur, in welche einzelne Sicherheitsschaltungen als Sicherheitsstufen eingeschaltet werden. Diese "Stufen" sind keine hierarchischen Stufen, sondern behandeln alle kaskadierten Teilnehmer an dem Sicherheitsring gleich.

Ein aus mehreren (zumindest zwei) Sicherheitsstufen aufgebauter Ring als Sicherheits-Schaltungsverbund sorgt für eine zuverlässige Abschaltung bei verschiedenen (nicht gleichen) Logikpegeln bzw. Kombinationen von Logikpegeln auf einem mehrkanaligen Ausgang. Hier wird bereits von einem Verbund ausgegangen, der Teilnehmer besitzt, die im Ringverbund geschaltet sind, unter Verwendung von zumindest zweikanaliger Signalführung im Ring.

Eine Sicherheitsschaltung zur Einschaltung in einen solchen Ring, mit einem mehrkanaligen Eingang und einem mehrkanaligen Ausgang ermöglicht es, den Ring aus zumindest zwei Sicherheitsstufen aufzubauen.

Das sichere Überwachen von mehreren Steuergeräten der Leistungselektronik arbeitet mit den selben Sicherheitsschaltungen, wobei im Betrieb Impulse auf die Ausgänge jeder Stufe aufgeschaltet werden, welche nicht über den Ausgang der Folgestufe weitergegeben werden, sondern in einer Eingangsschaltung der Folgestufe ausgeblendet werden, unter Reduzierung der Kanalzahl.

Ein Verfahren zum sicheren Abschaltung bedient sich mehrerer der Sicherheitsschaltungen ist aber in seiner Arbeitsweise durch Angabe der Signalwirkungen als Verfahren charakterisiert. In diesem Ringverbund erfolgt die Weitergabe (das Durchreichen) eines Abschaltsignals schnell, durch "Propagierung" im Ringverbund, ausgehend von einem Auslöser, der als auslösender Teilnehmer das Abschaltsignal in den Ringverbund einkoppelt.

Im kleinsten verfügbaren Ring sind zwei Sicherheitsschaltungen, wobei jeweils ein Ausgang mit einem Eingang mehrkanalig verschaltet ist.

Soweit im Folgenden von "Ausgang" gesprochen wird, wird das bei einem Verfahrensanspruch ein Signal betreffen, bei einem Vorrichtungsanspruch die Struktur, welche geeignet ist, das Signal abzugeben. Gleiches gilt für den Eingang mit seinem korrespondierenden Eingangssignal.

Die beschriebenen Steuergeräte der Leistungselektronik sind eigenständig geregelt, aber von einer übergeordneten Steuerung oder Regelung beeinflusst. Jedes dieser Geräte hat eigene Sicherheitskomponenten, Sicherheitserkennungen und auch periphere Sicherheitsbereiche, welche sicherheitsrelevante Signale abgeben. Einer jeweiligen solchen Leistungselektronik-Schaltung zur Steuerung von elektrischen Antrieben ist eine Sicherheitsschaltung zugeordnet, die ihrerseits in den Ringverbund geschaltet wird. Damit werden - logisch gesehen, von den Pegeln der Gatter her - die mehreren Antriebe insgesamt in einen Ring geschaltet, behalten aber hinsichtlich ihrer Steuerungstechnik und Leistungselektronik eine völlige Eigenständigkeit. Wenn eines dieser Geräte ein Fehlersignal erkennen möchte, aus dem "logischen Ring" bzw. der Logik-Ringstruktur (mit Logiksignalen arbeitender Ring), werden diese Signale aus dem Ring ausgekoppelt und in einem Sicherheitsbereich eines jeweiligen Antriebs erkannt, oder bei Erkennen eines Sicherheitsfalls (Fehler der Hardware oder Funktion eines Sicherheitssensors) im Steuerungsbereich des Antriebs in den Ring über Logikschaltungen eingekoppelt.

Insoweit ist die Ringstruktur eine direkte Weitergabe eines Eingangssignals, lediglich über Logikgatter zu einem Ausgangssignal einer Sicherheitsschaltung (zugeordnet einem Steuergerät der Leistungselektronik), ohne dass auf die Weitergabe des Signals im Ring das Steuergerät funktionsnotwendig Einfluss nehmen muß, um die Weitergabe des Signals zu erreichen. Der logische Ring ist unabhängig von dem realen Ansprechen von Sicherheitsfunktionen oder dem Erkennen eines Abschaltzustandes aus den Signalpegeln des Ringes, wie er in einem Sicherheitsbereich eines jeweiligen Steuergeräts erkannt wird.

Sicherheitssignale werden in jedem Steuergerät anhand einer Beobachtung der Signale des Rings erkannt, andererseits auch in den Ring eingekoppelt, wenn eine Sicherheitssituation von dem Steuergerät erkannt wird. Dabei ist sogar die Weitergabe und Einkopplung von einem am Eingang einer Sicherheitsschaltung erkannten Abschaltzustand zu ihrem Ausgang möglich, um aufgetretene Fehler innerhalb einer Logikstruktur im Ring zu überbrücken und das Fehlersignal des Eingangs auf den Ausgang einer jeweiligen Sicherheitsschaltung nochmals eigenständig koppeln zu können. Der Begriff "auch vorgekoppelt wird" heißt, dass die direkte Kopplung über die Logikgatter jedenfalls (oder: dauerhaft) gegeben ist, wenn keine Leitungs- oder Funktionsstörung der Gatter vorliegen und nur zusätzlich auch ein paralleles Vorbei- oder Herüberkoppeln eines Fehlersignals vom Eingang auf den Ausgang über den Sicherheitsbereich möglich ist. Dazu verwendet der Sicherheitsbereich die selben Wege, wie er ein in seinem Bereich und für seine Leistungselektronik oder seinen Antrieb oder das zugehörige Umfeld erkannten Fehlerzustand als mehrkanaliges Abschaltsignal in den Ausgang der zugehörigen Sicherheitsschaltung einkoppeln würde.

Das Weitermelden einer Abschaltinformation ist im Ring so schnell und direkt, praktisch nur durch ganz geringe Gatterlaufzeiten möglich, wohingegen Ansprechzeiten des Sicherheitsbereiches, bevor ein Abschaltzustand am Eingang einer Sicherheitsschaltung erkannt wird, deutlich größer sind.

Dadurch können kurze, impulsartige Testsignale auf einen jeweiligen Ausgang aufgeschaltet werden, die eine Unsymmetrie der Pegel für die Dauer des Impulses, also im mehrkanaligen Ausgangssignal erzeugen, ohne dass sofort der folgende Sicherheitsbereich eine Abschaltung erkennt. Die Impulse haben eine kurze Dauer von unter 1 msec und treten vergleichsweise selten auf, beispielsweise in einem zeitlichen Abstand von 10 mal bis 100 mal größer als der Impulsbreite des Testimpulses, um langfristig feststellen zu können, ob Funktionsstörungen oder Fehler auf den Leitungen vorliegen, beispielsweise mechanische Defekte, wie Querkopplungen, Dauer Null oder Dauer Eins oder Unterbrechungen. Die Testsignale werden dabei ausgewertet hinsichtlich ihrer Wirkung auf das Potential der Leitung, welche Schaltungsanordnungen als solches aber bekannt sind, so dass sie hier nicht weiter erläutert werden, beispielsweise ein XOR-Glied.

Die Testsignale werden in dem Ring aber so behandelt, dass sie immer nur einen Abschnitt weit Einfluss nehmen, also von der Ausgangsschaltung einer ersten Sicherheitsstufe zum Eingang einer zweiten Sicherheitsstufe, bzw. nur in ein Eingangsgatter hinein, welches diese Testimpulse unterdrückt oder ausblendet, so dass sie nicht an die Ausgangsstufe der nächsten Sicherheitsschaltung im Ring weitergegeben werden. Diese Ausgangsstufe erhält vielmehr eigenständig Testsignale eingekoppelt, welche wiederum nur bis zum Eingang der nächstfolgenden Sicherheitsschaltung gelangen und hier ausgeblendet oder unterdrückt werden. Die Funktion des Ringes kann so aufrecht erhalten werden, ohne dass ein Testsignal durch den gesamten Ring propagiert und Laufzeiten sich auf eine solche Weise akkumulieren, dass unerwünschte Betriebszustände entstehen, die von den Testsignalen gerade vermieden werden sollen.

Die Testsignale haben im Ring also nur eine begrenzte Laufzeit oder Wirkungstrecke, werden von jeder Sicherheits-Schaltungsanordnung für ihren Ausgang bis zum nächsten Eingang aber eigenständig vorgegeben.

Das Konzept der Ringabschaltung arbeitet mit unterschiedlichen Zeiten oder Zeitdauern, der beschriebenen Abschaltverzögerung des Sicherheitsbereiches, den kurzen Impulszeiten der Testsignale, der ganz kurzen Laufzeit der Logikgatter in einer jeweiligen Sicherheitsschaltung, welche Logikgatter Bestand des logischen Rings sind, und einer später zu erläuternde Einschaltzeit, welche dem Ausblenden des Eingangssignals durch gesteuerten Einfluss dient und damit das erneute Aktivieren des Rings aus einem angesprochenen Ausschaltzustand ermöglicht.

Der Ring hat eine (meta)stabile Wartelage, welche zumeist mit parallelen High-Logikpegeln auf allen mehrkanaligen Leitungen definiert wird. Störend auf diese Lage können die beschriebenen, jeweils eine begrenzte Strecke wirkenden Testimpulse sein, die aber so kurz gehalten sind, dass sie die Ansprechverzögerung der Sicherheitsbereiche nicht überwinden und auch im Ring nur eine begrenzte Wirkungsstrecke haben, also nicht über den Folgestufe (die nächste Sicherheitsschaltung) hinaus Wirkung zeigen.

Tritt ein Fehlerfall auf und wird ein Abschaltsignal von einem Ringteilnehmer verlangt, so wird der gemeinsame logische Pegel verändert, durch Einkoppeln eines mehrkanaligen Abschaltsignals in den Ausgang einer der Sicherheitsschaltungen. Arbeiten alle Gatter ordnungsgemäß, liegen keine Hardware-Fehler vor und auch keine mechanischen Defekte; werden die zumindest zwei Kanäle des Ausgangs des die Abschaltung verlangenden Steuergeräts auf logisch Null geschaltet.

Der logische Null-Pegel propagiert unmittelbar durch den gesamten Ring, lediglich verzögert durch die Laufzeiten (propagation delay) der Logikgatter im Ring, welche im Nanosekunden-Bereich liegen können. Der gesamte Ring ist dann auf logisch Null gelegt (Ansprech- oder Sicherheitslage). Es dauert dann die Ansprechzeiten der einzelnen Sicherheitsbereiche, bis alle angesprochen haben und die zugehörigen Antriebe entsprechende Sicherheitszustände einnehmen.
Die Sicherheitszustände sollen hier nur angedeutet werden. Es gibt unterschiedliche Kategorien der Abschaltung, das direkte Abschalten der Kategorie Null (momentenlos schalten), das gesteuerte Abschalten im Sinne eines Quickstop, als Kategorie 1 (der Drehzahlwert Null wird gesteuert vorgegeben), und es gibt die Kategorie 2, welche mit Moment die Drehzahl Null gesteuert erhält. Je nach Art des spezifischen Fehlers wird eine spezifische Art der Abschaltung erwünscht. Günstig ist die Steuerung durch Drehmoment auf eine Drehzahl Null, bei Fehlern im Grundgerät kann diese Steuerung aber nicht erfolgen, so dass ein Momentenlos-Schalten vorgegeben wird. Die beschriebenen Abschaltungen haben vorwiegend dieses Ziel, nachdem sie eine hohe Sicherheitsanforderung erfüllen müssen, schnell arbeiten müssen, synchron alle Antriebe abzuschalten haben und selbst fehlerfrei für alle praktisch denkbaren Defekte reagieren müssen.

Der Ring kann nur insgesamt aktiviert werden, werden Zwischenstrecken des Rings, zwischen beispielsweise einem Ausgang und einem Eingang der Folgestufe nicht gemeinsam hinsichtlich der zumindest zwei Kanäle in gleicher Weise mit einer logischen Null aktiviert, so liegt ein Schaltungsfehler oder einer der beschriebenen mechanischen Defekte in dem funktionellen Ring vor. Diese Fehler zu vermeiden, dienen die Testsignale, welche solche Fehler frühzeitig erkennen sollen und gleich eine Abschaltung einzuleiten haben, zum Erhalt der dauerhaften Funktion des Ringkonzepts. Die Ringkonzeption arbeitet mit beliebig vielen Teilnehmern und kann beliebig kaskadiert werden. Trotz der beliebig hohen Anzahl von Teilnehmern ist keine gesonderte Erweiterung von Eingangssignalen nötig, vielmehr spricht eine Sicherheits-Schaltung nur die Folgeschaltung an, zur Weitergabe eines ggf. erforderlichen Abschaltsignals, und erhält von der vorgelagerten Sicherheits-Schaltung ein ggf. auszuführendes Abschaltsignal. Beide Signale sind mehrkanalig, im Sinne von zumindest zwei Kanälen.

Der entstehende elektrische Verbund, in welchen die Sicherheitsschaltungen gestellt werden (elektrisch verbunden werden) ist eigenständig handlungsfähig, reaktionsfähig und in der Propagierung eines Abschaltsignals ungeheuer schnell, beispielsweise bei drei Ringteilnehmern mit jeweils zwei Logikgatter-Laufzeiten pro Sicherheitsschaltung im Bereich von wenigen 10 nsec. Größer als diese Laufzeiten sind die Impulsdauern der Testimpulse, wiederum größer als diese Impulsdauern sind die Ansprechverzögerungen der Sicherheitsbereiche jedes der Steuergeräte, wiederum größer als diese ist die mittlere Zeitdauer zwischen der Wiederkehr der Testimpulse und wieder größer als diese ist ein die Eingangsstufe einer jeweiligen Sicherheitsschaltung überschreibender oder außer Wirkung setzender Startpuls.

Nochmals größer als diese Zeit sind so genannte Sicherheitszeiten zum sicheren Stillsetzen eines Steuergerätes (Wechselrichter-enable, WR_EN). Die Sicherheitszeit bis zum Abschalten eines beispielsweisen Wechselrichters ist applikationsspezifisch und hängt vom Antrieb ab. Sie kann zwischen 100 msec bis zu 30 sec betragen. Das Stillsetzen des Wechselrichters erfolgt also nicht sofort dann, wenn der Sicherheitsbereich dieses Steuergeräts anhand der Logikzustände des Rings erkannt hat, dass ein Fehlerfall vorliegt und nach Ablauf des zeitlichen Mindestintervalls auch eine Abschaltung eingeleitet hat, sondern ggf. viel später. Veranlasst ist der Abschaltzustand aber, die Ausführung wird nur anwendungsspezifisch in ihrer Realzeit variieren.

Das Abgreifen ("Horchen" oder Beobachten) eines Abschaltsignals aus der logischen Ringstruktur kann über eine Schaltungsanordnung variabel verändert werden, abhängig von dem System- und Sicherheitszustand eines jeweiligen Steuergerätes oder eines jeweiligen Antriebs. Hier kann eine Vorgabe stattfinden, zwischen den Kategorien 0, 1 oder 2. Die Funktion und Integrität der logischen Ringstruktur wird davon aber nicht berührt. Es bleibt bei einer direkten Weitergabe in jeder Sicherheitsschaltung.

Die sichere Überwachung der Steuergeräte, insbesondere die Erzeugung von Abschaltsignalen und die Propagierung dieser Abschaltsignale an alle beteiligten Steuergeräte in der Ringstruktur ist in der Lage, sich selbst zu überwachen. Diese Überwachung erfolgt durch Testimpulse, welche zeitversetzt in die Ringstruktur an einem jeweiligen Ausgang einer Schaltungsanordnung eingekoppelt werden. Die eingekoppelten Testimpulse sind zeitversetzt, treten also nicht parallel oder überlappend auf den mehreren Kanälen, insbesondere nicht gleichzeitig auf beiden Kanälen auf. Sie überwachen die Ausgangsleitung bis zum nächsten Eingang und werden von einer Eingangsschaltung in der nächsten Sicherheitsschaltung an ihrer weiteren Ausbreitung abgehalten.

Verwendet man als Kombinationsschaltung zum Zusammenfassen der mehrkanaligen Eingangssignale mit alternativ vorhandenen Testimpulsen eine Oder-Gatter-ähnliche Schaltung, gelangt das Impulssignal nicht über dieses Gatter hinaus, nachdem zumindest eines der Signale im fehlerfreien Zustand immer auf dem logischen Pegel High (oder: Eins) ist. Demzufolge ist auch der Ausgang des logischen Oder-Gliedes immer eins, unabhängig von dem Vorhandensein des Testsignals.

Die Reduzierung der Kanalzahl, also die Reduzierung von beispielsweise zwei Kanälen zwischen Ausgang der Vorstufe und Eingang der folgenden Stufe wird im Ringverbund durch die Ausgangsschaltung wieder auf die ursprüngliche Kanalzahl erweitert, also vermehrfacht. Bei dieser Vermehrfachung kann erneut ein neues Testsignal eingekoppelt werden, um den nächsten Streckenabschnitt der Ringschaltung im Abstand der Impulse zu überprüfen. Die entsprechenden Spannungsmessungen, als Folge der Impulse, sind Auslöser der Erkennung von mechanischen Defekten in der Ringstruktur.

Diese nicht gleichen Logikpegel sind als ein kurzer Fehlerzustand zu betrachten, der durch die beschriebene Eingangsschaltung jeder Sicherheitsschaltung ausgeblendet wird und von dem Sicherheitsbereich noch nicht als Abschaltzustand interpretiert wird. Dauert diese Unsymmetrie der mehreren Kanäle aber länger an, spricht der Sicherheitsbereich an und erkennt einen Fehlerzustand, der beispielsweise durch mechanische Defekte im Zuge der mehrkanaligen Signalführung entstanden ist. Es wird - langsamer als durch die Laufzeiten der Gatterein Fehlersignal mehrkanalig auf die Ausgangsstufe geschaltet, von wo es dann schnell durch alle Gatter der Ringstruktur propagiert, zur Mitteilung an die anderen Teilnehmer des Sicherheitsverbundes.

Erkannt wird ein einkanaliges Fehlersignal, aufgrund des Vorhandenseins von zumindest zwei Kanälen, weitergegeben wird ein mehrkanaliges Fehlersignal, eingekoppelt in die Ringstruktur. Der Zustand des Rings kippt innerhalb weniger 10 nsec, mit der Folge der Erkennung eines gewünschten Abchaltens auch durch die anderen Sicherheitsbereiche der anderen Steuergeräte, im oben beschriebenen Sinn.

Statt eines einkanalig erkannten Fehlers kann auch ein mehrkanalig erkannter Fehler weitergegeben werden, wobei diese Fehlererkennung die wahrscheinlichere ist, da sie den Regelfall darstellt. Beide Fehlererkennungen sind ohne weiteres kombinierbar und können alternativ Platz greifen. Die Propagierungszeit durch den Ring und damit das Kippen des Ringes auf den Abschaltzustand (Ansprech- oder Sicherheitslage) geschieht innerhalb weniger Nanosekunden, die Einkopplung eines Fehlersignals aufgrund einer Erkennung eines Abschaltwunsches bei einem Antrieb erfolgt durch Einkopplung in eine jeweilige Ausgangsstufe.

Ausgangsstufe und Eingangsstufe einer jeweiligen Sicherheitsschaltung haben also eigenständige Aufgaben, sind funktionell getrennt zu betrachten und werden durch ein einkanaliges Signal miteinander verbunden. Gemeinsam bilden sie einen Abschnitt der Ringstruktur, der einer jeweiligen Sicherheitsschaltung zugeordnet ist. Zwischen diesen Abschnitten finden sich Leitungsabschnitte, die zu dem jeweils nächsten Abschnitt der Sicherheitsschaltung, auch wiederum bestehend aus der Eingangsschaltung und der Ausgangsschaltung, führen. So betrachtet hat eine jeweilige Sicherheitsschaltung eine Eingangsschaltung und Ausgangsschaltung, welche einkanalig verbunden ist. Funktionell arbeitet aber immer eine Ausgangsschaltung der einen Sicherheitsschaltung mit einer Eingangsschaltung der nächsten Sicherheitsschaltung zusammen, die unterschiedlichen Antrieben zugeordnet ist und in der mit Leitungen verbundenen Form so nicht ausgeliefert wird, logisch aber in dieser Form zusammenhängend erklärt werden muß. Dieser logische Zusammenhang enthält die Zweckangabe als Verständnishilfe, aber nicht als Einschränkung der jeweils zu betrachtenden zusammenhängenden Struktur aus Eingangsschaltung und Ausgangsschaltung einer eigenständigen Sicherheitsschaltung.

Hat der Ring eine stabile Sicherheitslage eingenommen, befinden sich also im regulären Systemzustand, ohne Verdrahtungs-, Schaltungs- oder Funktionsansprechen, in der Ringstruktur alle mehrkanaligen Signalleitungen auf logischem Pegel Null, kann dieser Zustand nur durch äußeren oder Fremdeingriff gelöst werden und der Ring wieder in seinen Wartezustand, den metastabilen Eins-Zustand bei allen mehrkanaligen Signalen gebracht werden.

Hier hilft eine Übersteuerung der Eingangsstufe (Eingangsschaltung) einer jeweiligen Sicherheitsschaltung, beispielsweise durch Ergänzung eines weiteren Eingangs der Oder-Funktion, auf welchen Eingang ein Eins-Signal aufgesteuert wird, wenn alle anderen Sicherheits-Bedingungen für die Wiedereinschaltung der gekoppelten Antriebe erfüllt sind. Dieses Signal ist für eine kurze Zeit, beispielsweise zwischen 20 msec und 100 msec aktiv, übersteuert die aus der Ausschaltlage weiterzugebende logische Null am Eingang, zugunsten eines kurzzeitig forcierten Eins-Zustandes (High-Pegel) an dem einkanaligen Zwischensignal zwischen der Eingangsschaltung und der Ausgangsschaltung der Sicherheitsschaltung, um es am Ausgang zu ermöglichen, dort ebenfalls durch Vorsteuern von Eins-Signalen auf beiden Kanälen eine mehrkanalige Eins-Information als Ausgangssignal zu dem nächsten Eingangssignal zu geben.

Dort ist an der adressierten Eingangsschaltung ebenfalls eine Übersteuerung wirksam, wie auch an den im Ring folgenden Sicherheitsschaltungen, so dass sämtliche Sicherheitsschaltungen in dem Ring auf einen Zustand gelegt werden, der eine Eins-Information an allen mehrkanaligen Ausgängen und Eingängen erlaubt.

Ist dieser forcierte Zustand erreicht, kann das Übersteuerungs- oder auch Ausblend-Signal genannte Signal an allen Eingangsschaltungen weggeschaltet werden. Der Ring bleibt in seinem (metastabilen) Wartezustand.

Ausführungsbeispiele erläutern und ergänzen die Erfindung(en).
- Figur 1: veranschaulicht ein Schaltungskonzept für eine Ringstruktur mit drei Sicherheitsschaltungen A, B und C, wobei jede dieser Sicherheitsschaltungen einem Antrieb zugeordnet ist, der mit AA, AB und AC bezeichnet ist.
- Figur 2: ist ein Signaldiagramm zur Veranschaulichung eines Abschaltens durch die Ringstruktur, wobei Sensor A anspricht. Dieser Sensor ist dem Antrieb AA und der Sicherheitsschaltung A zugeordnet. Er wird mit A50 bezeichnet.
- Figur 3: veranschaulicht ein Abschalten des Sensor B50, welcher dem Antrieb AB und der Sicherheitsschaltung B zugeordnet ist.
- Figur 4: ist eine Veranschaulichung von zeitlich aufgetragenen Signaldiagrammen der Signale c20b(t) und c20a(t) unter Einfluss von Testsignalen 100.

Figur 1 veranschaulicht eine Ringstruktur aus drei Schaltungsanordnungen und drei Antrieben mit zugeordnetem Umrichter (Frequenzumrichter). Die Frequenzumrichter als Repräsentant einer Schaltung der Leistungselektronik sind nicht gesondert dargestellt, sie sind allgemein bekannt. Beispielsweise der Antrieb C, abgekürzt AC weist einen Sicherheitsbereich C33 aus zumindest zwei Mikrokontrollern µC1, µC2 auf, der die Eingangssignale c10b(t) und c10a(t) erfasst, daraus einen Fehlerzustand ableitet und entsprechend vorgegebener Schaltmechanismen und Steuervorgaben einen Stopp einleitet, beispielsweise der Kategorie Null, der Kategorie Eins oder der Kategorie Zwei. Das kann zusätzlich einstellbar sein und ausgewählt werden.

Eine Peripherie für Sicherheitssensoren, repräsentiert anhand der anderen beiden Antriebe AA, AB und des zugehörigen Sensor-Bereiches A50 und B50 gibt weitere Signale zur Auswertung an die jeweilige Sicherheitsschaltung A33 bzw. B33, auch Sicherheitsbereich des jeweiligen Antriebs bzw. des Umrichters genannt. Der Antrieb C hat keinen solchen gesonderten peripheren Sicherheitssensor, sondern nur eine Eigensicherheit, die mit C33 repräsentiert ist.

Jeder Bereich eines Antriebs AA, AB und AC mit zugehörigem Umrichter hat einen Logikabschnitt, der hier vergrößert dargestellt ist und dem die Verteilung der Sicherheitssignale eines jeweiligen Antriebs zugewiesen wird. Die über den Logikbereich hinausgehenden Steuerelemente des Umrichters sind nicht dargestellt.

Es ist zu erwähnen, dass die drei vorgegebenen Antriebsbereiche AA, AB und AC mit ihrem jeweiligen Logikbereich A, B und C vom inneren Aufbau her vergleichbar sind, insbesondere ist der Logikbereich A, B und C gleich gestaltet. Die Beschreibung erfolgt daher maßgeblich im Bereich A des Antriebs AA, kann hinsichtlich der Bauelemente und Funktionen unmittelbar auf die Logikbereiche B des Antriebs AB und C des Antriebs AC übertragen werden. Die Bezugszeichen sind gleich, lediglich mit den zugehörigen Buchstaben gekennzeichnet. So entspricht der Eingang A10 des Antriebsbereiches AA dem Eingang C10 des Antriebsbereiches AC und dieser wiederum dem Eingangsbereich B10 des Antriebsbereiches AB. Gleiches gilt für die Ausgänge A20, C20 bzw. B20.

Die Signale sind mit Kleinbuchstaben bezeichnet und bei der ersichtlichen mehrkanaligen Ausführung, hier zweikanalig dargestellt, sind jeweils zwei Eingangssignale eigenständig aber parallel und zwei Ausgangssignale eigenständig und parallel. Ein jeweiliger Ausgang einer Sicherheits-Schaltungsanordnung wird über die genannten zwei Kanäle auf den Eingang der nächsten (folgenden) Sicherheitsschaltung geschaltet. Deren Ausgang wird wiederum auf den übernächsten Eingang und dessen Ausgang auf den ersten Eingang der Ausgangsschaltung zurückgekoppelt. Damit entsteht eine Ringstruktur, die bei den gezeigten drei Sicherheitsschaltungen in der beschriebenen Weise vorgenommen wird.

Es ist ersichtlich, dass eine beliebige Anzahl von Sicherheitsschaltungen in diese Ringstruktur eingefügt werden kann, ohne dass es eine äußere Begrenzung gibt.

Ersichtlich ist auch, dass keine der Sicherheitsschaltungen in ihrem Aufbau oder in der Anzahl ihrer Kanäle oder Eingänge oder Ausgänge davon abhängig ist, wie viele Sicherheitsschaltungen tatsächlich in die Ringstruktur eingefügt wurden oder worden sind.

Die besagte Ringstruktur besteht aus mehreren Abschnitten. Ein jeweiliger Logikabschnitt ist einer Sicherheitsschaltung zugeordnet und besteht aus einer Eingangsschaltung A30 und einer folgenden Ausgangsschaltung A40, entsprechend auch die Eingangsschaltung C30 und die Ausgangsschaltung C40 der Sicherheitsschaltung C beim Antrieb CC. Die außerhalb der Logikabschnitte liegenden Ringabschnitte sind Leitungsführungen, in der beschriebenen, zumindest zweikanalig ausgebildeten Struktur aus eigenständigen Signalen, die im regulären Betrieb, also ohne mechanische oder elektrische Defekte gleiche logische Pegel besitzen, jedenfalls stationär betrachtet.

Ein normaler logischer Einschaltpegel, der keinen Ausschaltfall und keinen Fehlerfall symbolisiert, ist eine logische Eins (High-Pegel) auf allen Leitungsabschnitten. Das gilt dann auch für die beispielhaft herangezogenen Signale a10a und a10b. Sie stammen aus dem Ausgang C20 der Sicherheitsschaltung C, gekoppelt zur Sicherheitsschaltung A. Dort sind es die Signale c20a(t) und c20b(t).

Am Eingang einer jeweiligen Sicherheitsschaltung "horcht" (ist also signalauskoppelnd angeschlossen) ein Sicherheitsbereich, bei Bereich C die Schaltung C33, der redundant aus mehreren, hier zwei Mikrokontrollern µC1, µC2 bestehen kann, welche die logische Sicherheitsabschaltung übernehmen und mit einer Schaltverzögerung arbeiten. Diese Schaltverzögerung T1 bringt es mit sich, dass ein Wechsel der beiden Kanäle auf den Low-Zustand (logisch Null) ein Abschalten des Sicherheitsbereiches und eine Erkennung des Fehlerfalls erst nach dieser Ansprechverzögerung veranlasst. T1 liegt im Bereich von bevorzugt oberhalb 1 msec, kann aber auch niedriger gewählt werden, oberhalb von 500 nsec.

Das sichere Stillsetzen eines Antriebs wird entweder durch die Aktivierung eines der Sensoren in der Peripherie (als aktiver oder passiver Sensor) gestaltet. Ein solcher Sensor kann beispielsweise ein Lichtgitter, eine Sicherheitsmatte oder eine Lichtschranke sein. Ihre Signale werden dem Sicherheitsbereich zugeführt, beispielsweise C33 bei Antrieb C oder A33 bei Antrieb A.

Die so erhaltene Abschaltinformation von A50 betrifft zunächst den Bereich des Antriebs A. Sie weiter-zu-vermitteln ist Aufgabe des Ringes, der aus Logikbauelementen eine sehr geringe Laufzeit T0 im Sinne einer Propagierung eines Ausschaltsignals aufweist. Dazu speist der Sicherheitsbereich A33 ein mehrkanaliges Ausschaltsignal über die Signalausgänge O1 und O2 auf zwei Und-Gatter A40b und A40a. Gehen die Signale O1 und O2 auf Null, wird auch das Ausgangssignal Null, was am Ausgang A20 als zwei eigenständige Signale, die aber parallel und im wesentlichen gleichzeitig auf logisch Null schalten, erscheint. Über den Zwischenabschnitt der Leitungsführung wird dieses Abschaltsignal auf den Eingang B10 der nächsten Sicherheitsstufe B weitergeleitet.

Zur Sicherheitsschaltung A gelangt in entsprechender Weise auch das Ausgangssignal des Ausgangs C20 der Sicherheitsschaltung C, über die beiden Signale c20a(t) und c20b(t) zum Eingang A10. Auch hier liegen eigenständige Signale vor, die aber parallel auf Null schalten, wenn das Low-Signal des Eingangs B10 durch die Logikgatter der Sicherheitsstufe B und den die Eingangsschaltung C30 der Sicherheitsstufe C propagiert ist, um am Ausgang C20 zu erscheinen.

Die Logiksignale a10a(t) und a10b(t) gelangen im wesentlichen zeitgleich zum Oder-Gatter C30, welches die Eingangsschaltung der Ringstruktur in der Sicherheitsschaltung A darstellt. Die Eingangsschaltung A30 nimmt das mehrkanalige Signal des Eingangs A10 auf, ist als Funktionsglied so ausgebildet, aus diesem mehrkanaligen Eingangssignal ein in der Kanalzahl reduziertes Zwischensignal a30(t) zu bilden, das bei gleichzeitig auf Null liegendem Eingangssignalen auch auf Null schaltet, um die Und-Gatter der Ausgangsschaltung A40 wiederum mehrkanalig mit einem Null-Signal zu versorgen, was aber keine weiteren Auswirkungen hat, nachdem diese Gatterschaltungen Auslöser und das einkoppelnde Element des Abschaltsignals in den Ring waren.

Der gesamte Ring liegt nunmehr auf einem Low-Potential, was sämtliche Leitungsführungen zwischen den Ringabschnitten innerhalb der Sicherheitsschaltungen betrifft, und zusätzlich auch die gesamten Signalleitungen der Logikbausteine der Sicherheitsschaltungen selbst betrifft.

Das Sicherheitssignal, hier der Wechsel von dem wartend stabilen, eigentlich metastabilen Eins-Zustand zu dem stabilen Null-Zustand, welcher einen Fehlerfall und eine Abschaltinformation symbolisiert, ist zuverlässig und schnell erreicht. Sämtliche Sicherheitsbereiche A33, C33 und entsprechend auch der Abschaltbereich B33 können jetzt aufgrund vorgegebener eigener Logik die vorgezeichnete Abschaltung durchführen. Keiner dieser Sicherheitsbereiche war an der Weiterleitung des durch den Ring propagierenden Abschaltsignals beteiligt, vielmehr ist der Ring eigenständig auf Null gekippt, sehr schnell und nur verzögert durch die Summe T0 der Laufzeiten der im Ring beteiligten Logikgatter.

Jede eingangsseitig und ausgangsseitig verschaltete Sicherheitsschaltung steht mithin in dem Ringverbund (der Ringstruktur) zur Überwachung aller an der Ringstruktur beteiligten Teilnehmer und ihrer Antriebe sowie Steuergeräte.

Der reguläre Betriebsfall war so beschrieben, als hier alle Schaltungen ordnungsgemäß arbeiten und die Leitungen keine Fehlerfälle oder mechanischen Defekte, wie Querkopplungen, festes Null-Signal oder festes Eins-Signal oder eine Unterbrechung aufweisen. Der Sicherheitsfall ist hier angenommen die Situation, bei der alle Signale auf logisch Null kippen. Es kann ebenso auch die umgekehrte Logik realisiert werden, bevorzugt ist aber die Ausschaltung bei dem logischen Signalpegel Null. Dies stellt den Sicherheitsfall und die sichere Lage des Ringes dar.

Eine mehrkanalige Eingangsschaltung und eine mehrkanalige Ausgangsschaltung derselben Sicherheitsschaltung sind in der beschriebenen Weise durch das Signal a30(t), entsprechend auch das Signal c30(t), gekoppelt, welches Ausgangssignal der Eingangsschaltung A30 bzw. C30 ist.

Durch diese Reduzierung der Kanalanzahl und die Eingangsschaltung C30 im Sinne einer Oder-Funktion können Testimpulse 100, welche nicht gleichzeitig auf allen, hier den beiden Kanälen auftreten, ausgeblendet werden. Diese eingesteuerten Testsignale einer Impulsschaltung C35 der Sicherheitsschaltung C, hier eingekoppelt über die Ausgangsschaltung C40, den Ausgang C20, weiter an den Eingang A10 und die Eingangsschaltung A30 reicht in seiner Wirkung nicht weiter, als bis zu dieser Eingangsschaltung. Damit kann ein solches mehrkanaliges Testsignal nicht weiter propagieren und prüft nur die Funktion der Ausgangsschaltung und des Leitungsabschnitts zwischen dem Ausgang und dem nächstfolgenden Eingang. In gleicher Weise sind Impulsschaltungen A35, B35 auch jeder anderen Sicherheitsschaltung zugeordnet, die auch jeweils nur einen begrenzten Abschnitt des Rings überprüfen, ausgehend von dem Ausgang von beispielsweise A20 bis zur nächsten Eingangsschaltung B30. Die Testimpulse werden in dem jeweiligen, die Eingangsschaltung bildenden Funktionsglied gesperrt und können es nicht passieren.

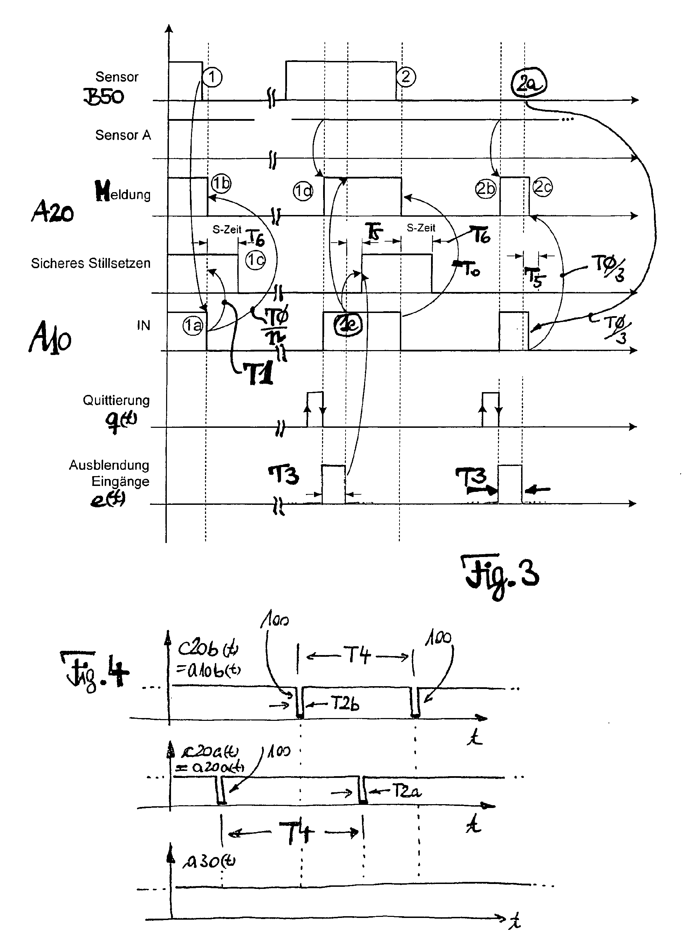

Die Testimpulse, welche in der Figur 4 mit einer kleinen Impulsbreite T2a, T2b dargestellt sind, sind als Impulse 100 auf die Signale aufgekoppelt, in ihrer Impulsbreite aber schmäler, als die Ansprechverzögerung T1 jedes der beteiligten Sicherheitsbereiche C33, A33 und B33. Dies ist Voraussetzung dafür, dass keiner der Sicherheitsbereiche durch die Testsignale anspricht, gleichzeitig aber eine eigenständige Überprüfung der Funktionsfähigkeit der Ringstruktur sichergestellt werden kann.

Die Sicherheitsbereiche sprechen namentlich auch dann an, wenn eine Unsymmetrie der Pegel an ihrem Eingang für eine längere Zeit anliegt, als die Ansprechverzögerung T1. Dies wird als ein mechanischer oder elektrischer Defekt interpretiert, der zu einem sicheren Abschalten führen wird.

Die nicht gleichen Logikpegel auf den zwei Signalleitungen zwischen beispielsweise Ausgang C20 und Eingang A10 werden nach Ablauf von beispielsweise 1 msec von dem Sicherheitsbereich A33 mit seinen zwei Mikrokontrollern erkannt und über die Signale 01, 02 in den Ringverbund eingekoppelt, nachdem das Oder-Gatter A30 diesen Systemzustand nicht erkennen würde und nicht selbst die Propagierung des Fehlersignals übernehmen kann.

Vermittelt wird dabei von dem Sicherheitsbereich A33 aus einem einkanaligen Fehler (nicht gleiche Logikpegel am Eingang A10) ein mehrkanaliges Abschaltsignal über die beiden Und-Gatter A40b und A40a, die es in den Ring einkoppeln. Von hier aus propagiert dieses Fehlersignal selbstständig über sämtliche beteiligte Teilnehmer mit einer großen Geschwindigkeit, lediglich verzögert um die Laufzeiten, die man als praktisch verzögerungsfrei ansehen kann. Selbst bei vielen beteiligten Teilnehmern in dem Sicherheitsring werden Laufzeiten von 200 nsec kaum überschritten. Die realen Laufzeiten sind vielmehr wesentlich geringer, bis ein bei beispielsweise Ausgangsschaltung A40 eingekoppeltes Fehlersignal wiederum diese Ausgangsschaltung über das vorgelagerte Eingangsglied A30 und zuvor sämtliche Ringteilnehmer erreicht.

Die minimale Anzahl von Ringteilnehmern ist zwei, wenn z.B. nur die Sicherheitsschaltung A und B eingesetzt werden, mit Ausgang A20 gekoppelt an Eingang C10.

Auch in dieser Schaltung sind die Impulse 100 den Signalleitungen überlagerbar, um un-symmetrische Logikpegel zu erzeugen, welche aber so kurz sind, dass die Sicherheitsbereiche C33 und A33 noch nicht ansprechen. Die Logikpegel werden demnach nicht gleichzeitig auf allen parallelen Kanälen in einem jeweiligen Abschnitt zwischen Ausgang und Eingang von zwei benachbarten Sicherheitsschaltungen angelegt, sondern zeitversetzt und damit nicht überlappend. Die zeitliche Beabstandung T4 bzw. die Wiederholrate der Testimpulse kann wesentlich länger sein, als ihre Impulsbreite, so zwischen 10 mal bis über 100 mal länger, was durch den Zeitabstand T4 in Figur 4 verdeutlicht ist. Dort sind auch die nicht überlappenden Testimpulse 100 auf beiden Signalen c20b(t) und c20a(t) dargestellt. Es ergibt sich daraus, das einkanalige Zwischensignal a30(t), nach der Eingangsschaltung A30, das diese Testimpulse ausgeblendet hat bzw. nicht passieren lässt.

Ein Abschaltfall, der nicht automatisch und eigenständig, unabhängig von dem Ansprechen einer der Sicherheitsschaltungen A33, C33 oder B33 durch die Logikschaltungen des Rings propagiert wird, ist derjenige der durch elektrischen oder mechanischen Defekt verursachten Unsymmetrie eines Eingangs A10, bzw. der hier ankommenden Eingangssignale. Diese können an den Logikgattern vorbei von dem Sicherheitsbereich nach Ablauf des Mindestintervalls T1 (als Ansprechverzögerung) an der Eingangsschaltung A30 vorbeigeleitet und in dem Ausgang A40 eingekoppelt werden. Dies ist eine zusätzliche Möglichkeit, mehr oder höhere Sicherheit zu erhalten, für die eigentliche Funktion des Ringes aber nicht erforderlich. Die Funktion des Ringes ist vielmehr sichergestellt, unabhängig von einem Ansprechen oder Nichtansprechen eines der Sicherheitsbereiche (als Signal oder Sicherheitsabschaltung C33, A33 und B33).

Das direkte Durchleiten im Sinne einer praktisch verzögerungsfreien Weitergabe durch jeweils eine Eingangs-/Ausgangsschaltung einer Sicherheitsschaltung arbeitet auch ohne jede Beteiligung des nur am Eingang horchenden oder signalauskoppelnden Sicherheitsbereiches mit den redundanten Mikrokontrollern.

Sowohl der Ring arbeitet eigenständig und unabhängig, wie auch die Abschaltung eines jeweiligen Antriebs eigenständig erfolgt. Sie sind gekoppelt über das Horchen am Eingang (für die Abschalterkennung) und durch das Einkoppeln des Abschaltsignals am Ausgang (für die Weiterleitung des Ausschaltsignals).

Ist der metastabile Zustand im Ring einmal durch eine Ausschaltinformation auf logisch Null gelegt, kann dieser Ring erst durch Fremdeinfluss wieder den Logisch-Eins-Zustand erreichen. Es ist eine besondere Einrichtung erforderlich, die hier durch einen weiteren Eingang des Funktionsgliedes der Eingangsschaltung A30, B30 und C30 ermöglicht wird.

Die Abschaltung eines Sicherheitsbereiches wird auch von diesem gleichen Sicherheitsbereich wieder rückgängig gemacht. Dazu wird von dem die Abschaltung auslösenden Sicherheitsbereich A33, bei angenommenem Ansprechen des Sensors A50, ein Eins-Signal auf dem dritten Eingang des Oder-Gatters A30 - nach Eintreffen eines Quittungspulses an NA-Q und Wegfall des Sensoransprechens - gelegt. Die Freigabe wirkt auch auf die Abschaltsignale O1, O2, so dass der innere Abschnitt des Rings im Bereich der Sicherheitsstufe A durch Außeneinfluss auf logisch Eins gelegt wird. Der Ausgang A20 ist damit forciert mehrkanalig logisch Eins.

Es wird auch bei allen anderen Antrieben die gleiche forcierte Einflussnahme über das Quittungssignal q(t) geschehen, so dass auch sämtliche übrige Ausgänge B20 und C20 mehrkanalig auf logisch Eins angehoben werden. Damit liegen auch sämtliche Eingänge mehrkanalig auf logisch Eins und der Zwangseingriff über den zusätzlichen Eingang des jeweiligen Oder-Gatters A30, B30 und C30 kann weggeschaltet werden. Der Ring hält sich - wenn kein weiterer Fehlerfall oder kein weiteres Abschaltsignal eines Sensors vorliegt - selbsttätig und eigenständig in dem metastabilen Zustand, als Wartezustand.

Für diese beschriebene Arbeitsweise werden die Kaskadierung und die Propagierung des Null-Signals außer Kraft gesetzt. Das diese Außer-Kraft-Setzung erreichende Signal q(t) ist nur pulsförmig, fällt also nach einer kurzen Zeitspanne T3, beispielsweise größer 10 msec oder größer 20 msec weg, zu welchem Zeitpunkt es nicht mehr benötigt wird, um den Ring in seinem Eins-Zustand zu halten. Die Pulsdauer dieses Signals sollte größer sein, als die Ansprechverzögerung der Sicherheitsbereiche.

Das Übersteuern der Eingangsschaltung, beispielsweise der Eingangsschaltung C30 an dem dritten Eingang erfolgt von dem betreffenden Sicherheitsbereich nur, wenn beide beteiligte Mikrokontroller das Freigabesignal erteilen, im Bereich C ist das der Sicherheitsbereich C33, das Und-Gatter C31 und die Ansteuerung dieses Und-Gatters von beiden am Sicherheitsbereich C33 beteiligten Mikrokontrollern. Die Einschalt-Information wird auch mit den O1-, O2-Signalen über die Und-Gattern C40b und C40a verknüpft, damit a30(t)=1 auf den Ring wirken kann. Gleiches geschieht bei allen anderen Sicherheitsschaltungen, gekoppelt über das pulsförmige q(t)-Signal als Einschaltquittierung.

Die Funktionsweise beim Auslösen des Ansprechens des Sensors A im Sicherheitsbereich des Antriebes AA ist in Figur 2 schematisch erläutert, mit Zeitdiagrammen und Logikpegeln. Bei der Schaltung nach Figur 1 erfolgt das Auslösen einer Abschaltinformation und das Weiterleiten dieser Information beginnend mit dem Ansprechen beispielsweise des Sensors A50, Ziffer (1) (eingekreiste Ziffern in Figur 2). Die vorgegebene Flanke wird praktisch verzögerungslos über die gesamte Ringstruktur A20, B10, B20, C10, C20, A10 weitergekoppelt, nachdem sie in das Ausgangssignal A20 über die Ausgangsstufe A40 eingekoppelt wurde. Das repräsentiert das zweite Diagramm "Weitermeldung Sensor" bei der eingekreisten Ziffer (1a). Der Sensor B50 bleibt nicht aktiviert, also störungsfrei.

Nach der Aktivierung des Sensors A50 bei (1), dem Weitermelden auf den Ausgang A20, bei (1a) zum Einkoppeln in den Ring und der Propagierung des Signals ist der gesamte Ring auf logisch Null geschaltet. Die dazu angefallene Propagierungszeit (Laufzeit) ist T0, erkennbar bis zur fallenden Flanke bei (1b), am Eingang A10.

Alle Antriebe veranlassen ein sicheres Stillsetzen, durch ihre jeweiligen Sicherheitsbereiche A33, B33 und C33, jeweils eigenständig.

Jeder Wechselrichter hat eine S-Zeit T5 für sicheres Stillsetzen. Diese Zeit ist (deutlich) größer als die Abschaltverzögerung T1. Die fallende Flanke des zugehörigen Signals "sicheres Stillsetzen" repräsentiert das Ende der Abschaltfolge. Die Antriebe befinden sich in einer Stopkategorie.

Ein erneutes Einschalten aus dem abgeschalteten Zustand wird anschließend erläutert, ist in Figur 2 zur Veranschaulichung aber gleich angeschlossen, obwohl zeitlich weit beabstandet.

Zur Zurückversetzung des Rings auf den Eins-Zustand wird eine manuelle Quittierung parallel an Quittierungseingängen NA-Q-In aller Antriebsbereiche erfolgen. Das Signal ist q(t). Nach Übernahme durch eine fallende Flanke, werden nur die lokalen Sensoreingänge in jedem Sicherheitsmodul ausgewertet. Diese lokalen Sensoreingänge betreffen den Bereich des Umrichters, keine Sensoreingänge von Abschaltsensoren oder Überwachungssensoren anderer Antriebe und keine Ringinformation.

Der Eingang der Sicherheitsschaltung A wird bei (1 c) dazu für eine kurze Zeit T3, beispielsweise 20 msec ausgeblendet. Beide Mikrokontroller des Sicherheitsbereichs A33 legen dazu eine logische Eins auf das Und-Gatter A31, dessen Ausgang e(t) auf den dritten Eingang des Oder-Gatters A30 geführt ist. Damit wird die Ausgangsschaltung A40 aus den beiden Und-Gattern A40a, A40b freigeschaltet. Das interne Signal O1/O2 mehrkanalig, wird auf den gewünschten mehrkanaligen logisch Eins Pegel geschaltet und propagiert zum nächsten Teilnehmer. Alle beteiligten Teilnehmer im Ring verhalten sich so, bis am Eingang A10 der Sicherheitsschaltung A ein logisches Eins-Signal ansteht, zeitlich bei (1e). Dies war möglich, weil an den anderen Antrieben AB und AC kein Sensor eine Abschaltung verlangte, damit Freigaben signalisierten und q(t) allen Teilnehmern synchron zugeführt wurde.

Die Freigabe des jeweiligen Antriebs, bzw. dann aller Antriebe, erfolgt nach Ablauf der Verzögerungszeit T5, hier mit beispielsweise 5 msec angegeben, im Anschluss an die fallende Flanke von e(t), nicht vorher.

Daraus ersichtlich ist die Ausblendzeit T3 deutlich größer als die Laufzeit, sowohl eines Teilnehmers aus dem Ring, sowie auch aller Laufzeiten in Summe gesehen, also der Gesamtlaufzeit im Ring. Hierbei symbolisiert n die Anzahl der in den Ring geschalteten Teilnehmer. In erster Näherung verhalten sich alle Ringteilnehmer hinsichtlich ihrer Beitrags zur Gesamtlaufzeit gleich. Geht man von einer gesamten Laufzeit T0 im Ring aus, ist in erster Nähe die Laufzeit T0/n pro Ringnehmer die Gesamtlaufzeit geteilt durch die Anzahl der Ringteilnehmer. Es ist außerdem an dem Einschaltvorgang gemäß obiger Darstellung ersichtlich, dass die Verzögerungszeit T5 als Startverzögerung der Antriebe wesentlich größer ist, als die Laufzeit im Ring, im Sinne der Gesamtlaufzeit T0.

In einem weiteren, direkt angeschlossenen Beispiel der Figur 2, im grau unterlegten Kasten, nach der strichlinierten Vertikallinie, wird ein erneutes Abschalten durch Ansprechen des Sensors A50 gezeigt.

Die Ziffer (2) zeigt das Ansprechen des Sicherheits-Bereiches A33, die Weitergabe und Einkopplung dieses Signals in den Ausgang A20, das durch den Ring propagierende Signal zum Eingang A10 zurück (aus der Kaskadierung), und die Ansprechzeit des sicheren Abschaltens mit der S-Zeit T6. Soll aus dem jetzt wieder abgeschalteten Zustand erneut eingeschaltet werden und wird angenommen, dass bei (2a) der Sensor A50 noch immer eine Abschaltung verlangt, geschieht das im folgenden der Figur 2 Skizzierte mit den bereits bekannten Signalen.

Bei einer Quittierung zur Wieder-Inbetriebnahme und zum Aktivieren des Rings auf das Eins-Potential in seine Wartelage, wird zunächst nur die lokale Sensorinformation ausgewertet und an der Rückmeldung, dem Ausgang A20, kein logisches Eins-Signal ausgegeben, weil O1 und O2 nicht freigeben. Durch die Übersteuerung mit dem Ausblendsignal e(t) während T3 wird der Eingang A10, bzw. das nur einkanalige Zwischensignal a30(t) kurzzeitig auf Eins gehen, eingezeichnet bei (2b) in Figur 2.

Nach dem Ende des Ausblend- bzw. Übersteuerungspulses mit der Pulsbreite T3, der bei allen Sicherheitsschaltungen A, B und C wirkt, wird der Eingang aller Sicherheitsschaltungen wieder real von den Eingangsschaltungen A30, B30 bzw. C30 beobachtet und nachdem der Sicherheitsbereich A33 die Ausgangsschaltung A40 über die Abschaltsignale O1, O2 auf Null hält, wird dieses Abschaltsignal über die wieder funktionsfähig gesteuerte Ringstruktur weitergemeldet, bis der Eingang A10 nach der Laufzeit T0 erreicht wird (genauer: etwa 2/3 der Gesamtlaufzeit T0 bei drei Teilnehmern im Ring).

Aus dieser Funktionsbeschreibung ist ersichtlich, dass keine Störsignale oder fehlerhaften Einschaltungen geschehen, auch in solchen Zuständen, die nicht das eigentliche Abschalten und das eigentliche Einschalten, sondern Spezialfälle sind, bei denen ein Einschalten verlangt wird, das übersteuernd in den Ring eingekoppelt wird und dennoch nicht dazu führt, dass irgend einer der im Ring geschalteten Teilnehmer ein Freigabesignal an den jeweiligen ihm bzw. ihnen zugeordneten Antrieb gibt. Die Antriebe bleiben sicher ausgeschaltet, auch dann, wenn das Freigabesignal manuell zwingend vorgegeben wird.

Eine dabei mitwirkende Tatsache ist die nur lokale Auswertung des Sicherheitssignals von dem jeweiligen Sensor. Die Auswertung betrifft den Eingang, nicht den Ausgang, der bei aktiviertem Sensor (Sperrsignal angenommen) immer deaktiviert bleibt, wenn der zugehörige Sensor angesprochen hat und noch in diesem Zustand befindlich ist. Das Auswerten im Eingangsbereich und das Weitergeben vom Ausgangsbereich wird durch die beiden Sicherheitssignale möglich, von denen das eine Signal e(t) die Übersteuerung im Eingangsbereich veranlasst, wenn eingeschaltet werden soll, und die anderen Sicherheitssignale O1 und O2 sind, welche dem Ausgangsbereich zugeführt werden, aber weiterhin sperrend wirken und Nichts von dem Übersteuerungssignal an die zugeordneten UND-Gattern weitergeben, was durch die manuell eingeprägte Vorsteuerung zu veranlassen vorgegeben wird. Zu diesen beiden Wirkungen kommt die dritte Wirkung hinzu, wonach allen Teilnehmern jeweils eigenständig das Quittierungssignal zugeführt wird, um jeweils eigenständig für jeden Teilnehmer intern das Freigabe- oder Übersteuerungssignal e(t) zu erzeugen, das dann die jeweilige Eingangsschaltung, im Beispiel als ODER-Gatter mit drei Eingängen, übersteuert. Nicht übersteuert wird aber der Ausgangsbereich, der weiterhin den realen Zustand zugeführt erhält, der durch die jeweiligen Signale O1 und O2 der tatsächlich gemeldeten Realität der zugehörigen Sensoren entspricht.

In einer übertragenden Betrachtung wird so jeder Ringteilnehmer eigenständig im Eingangsbereich vorgesteuert, betrachtet nur die lokale Sensorinformation, die im Ausgangsbereich entweder weiterhin sperrend oder schon freigebend wirkt, und wird so jeweils in einen Zwischenzustand versetzt, der es ermöglicht, den Ring wieder in den aktiv wartenden Wartezustand zu versetzen, wenn alle Sensoren, im Beispiel A50, B50 und derjenige des Sicherheitsbereichs C33, nicht mehr angesprochen haben. Dann wechselt der Zwischenzustand in den zu erreichenden metastabilen Wartezustand, der jetzt und in Folge in der Lage ist, jede künftig gemeldete Störung schnell, zuverlässig und hochgenau an alle anderen Ringteilnehmer zu vermitteln.

Durch das Übersteuerungssignal e(t) sind zwei der drei Sicherheitsschaltungen im Ring in ihrem jeweiligen Ausgang, hier B20 und C20, auf logisch Eins gesteuert, so dass der Ring vermeintlich funktionsfähig ist, bis hin zum Eingangssignal A10, nur das Ausgangssignal A20 und der Eingang B10 der Folgeschaltung sind durch Einfluss des nicht von e(t) übersteuerten Ausgangsbereichs A40 der Sicherheitsschaltung A auf Null. Diese logische Null kann durch das inhibitierende Signal e(t) der Sicherheitsschaltung B aber nicht durch den Ring propagieren und erhält erst dann eine Propagierungs-Freigabe, wenn die Wirkung von Signal e(t) nach Ablauf der Zeit T3 wegfällt.

Dann ist der Ring so schnell auf die stabile Null-Lage heruntergezogen, wie das die Laufzeit im Ring erlaubt und nachdem diese Laufzeit wesentlich kleiner ist, als die Einschaltverzögerung von jedem der beteiligten Antriebe AA, AB und AC, namentlich T5 als Startverzögerung, kann sichergestellt werden, dass keiner der Antriebe trotz teilweise funktionsfähig erscheinendem Ring ein Einschaltsignal (auch: Freigabe) erhält.

Dieses Ergebnis ist besonders aus dem Gesichtspunkt zu würdigen, dass der Teilnehmer mit der Sicherheitsschaltung C ja gerade nicht erfährt, welche Ansprechlage der Sensor A50 tatsächlich hat, während das Übersteuerungssignal e(t) (Ausblendsignal) alle in der Ringstruktur verbundenen Sicherheitsschaltung in die Einschaltlage zwingt. Würde der Antrieb C hingegen kurzzeitig einschalten, würde er sich anders verhalten, als der real noch immer abgeschaltete Antrieb A, dem sein eigenes Sicherheitssignal des Sensors A50 wohl bewusst und auch unmittelbar aus seiner lokalen Auswertung bekannt ist. Es ist also nur vermeintlich ein leichtes Problem, ein Sicherheitssignal zu propagieren und den Ring danach wieder in eine Einschaltlage zu versetzen, aus der sie den Sicherheitszustand wieder zuverlässig erreicht; es ist vielmehr ein äußerst schwieriges Problem, diese unterschiedlichen Lagen, die Wartelage (High) und Sicherheitslage (Abschaltlage, Low) zu verwalten, eindeutig ineinander überzuführen und während der Zeiträume der Überführung, des Einschaltens oder Abschaltens, keine indifferenten und gefährlichen Zustände zu erzeugen, die zu den vielen Antrieben unterschiedliche Signale vermitteln, so dass sich die Antriebe, welche mechanisch gekoppelt sein können, nicht wirklich gleich verhalten.

War im vorhergehenden Beispiel die Sicherheitsschaltung A betrachtet, das Ansprechen des zugeordneten Sensors A50 und die Wirkungen, welche das Ansprechen des Sensors nach Propagierung des Sicherheitssignals über die anderen beiden Teilnehmer B und C wiederum an derselben auslösenden Sicherheitsschaltung A erzeugt (deren Eingang), so soll in einem weiteren Beispiel gezeigt werden, wie sich die Signale auswirken, wenn der Sicherheitsbereich B anspricht, und welche Wirkung sich auf das Eingangssignal A10 des der Sicherheitsschaltung B vorgelagerten Sicherheitsschaltung ergibt, also der am weitesten entfernten Schaltung im Ring. Die gleiche Betrachtung kann ebenso unter Auswechslung der zugehörigen Bezugszeichen B und C für die Sicherheitsschaltung C erfolgen, mit Wirkung auf den Eingang B10. Sie kann ebenso für die Sicherheitsschaltung A erfolgen, mit Wirkung auf den Eingang C. Damit werden bei drei Schaltungen im Ring alle Zustände erfasst, die als kritisch auftreten können, so dass der Schluss gerechtfertigt ist, dass ein sicheres System vorliegt. Sicherheitsschaltung, welche näher an der auslösenden Schaltung liegen, verhalten sich nicht schlechter, als die Entfernteste, welches die im Ring Vorgelagerte ist.

In dem Beispiel nach Figur 3 wird die Aktivierung des Sensors B50 veranschaulicht, die entsprechend der Aktivierung des Sensors A50, nur für den Antriebsbereich AB arbeitet. Am Ausgang B20 wird das Aktivieren nach Einkoppeln in den Ring über die Gatterschaltung B40 mehrkanalig gemeldet und propagiert durch den (gesamten) Ring über die Sicherheitsschaltungen C zum (entferntesten) Eingang A10. Dies ist bei (1a) veranschaulicht, durch ein mehrkanaliges Null-Signal, welches das sichere Stillsetzen des Sicherheitsbereiches A33 bei (1c) einleitet. Das Stillsetzen geschieht nach Ablauf der Zeit T6, als S-Zeit benannt, um stark abhängig von der Applikation, so in einem weiten Feld von schnelleren Anwendungen bei 100 msec bis hin zu sehr langsam ansprechenden Antreiben großer Maschinen bei bis zu 30 sec. Vorgelagert ist eine Ansprechverzögerung T1, welche oberhalb der Zeitdauer der Testimpulse liegt, beispielsweise oberhalb von 1 msec bei Testimpulsen unterhalb dieser Größenordnung. Praktisch zeitgleich mit der fallenden Flanke von A10 ist zeitverzögert um einen Bruchteil der Laufzeit diese Flanke auch am Ausgang A20 anwesend, was bei (1b) im dritten Diagramm von oben gezeigt wird. Diese "Meldung" schließt den Kreis, wobei der Bruchteil der Anzahl der Teilnehmer im Kreis bestimmt wird, wie oben angegeben.

Nach der Übernahme einer wiedereinschaltenden Quittierung q(t) wird in allen Sicherheitsschaltungen wiederum nur die lokale Sensor-Information ausgewertet, bei (1d), so dass der Ring bis auf Ausgang B20 wieder auf eine logische Eins wechselt. Bei Ausgang B20 hängt der logische Pegel von dem Zustand des Sensors B50 ab. B20 wird auf logisch Eins angehoben, wenn B50 nicht aktiviert ist. Ist B50 aktiviert, bleibt der Ringabschnitt B20 bis C10 auf logisch Null. Für die Betrachtung der Wirkung der Schaltung B auf die Schaltung A heißt das während T3 aber in beiden Fällen, dass sowohl Eingang A10, als auch Ausgang A20 auf logisch Eins wechseln, weil - wie oben gesagt - der Ring - bis auf den Abschnitt B20-C10 auf logisch Eins wechselt. Nach Ende der manuellen Eingriffszeit T3, veranlasst durch die manuelle Quittierung q und die durch das System vorgegebene Ausblendzeit in einer Größenordnung wesentlich oberhalb T0, beispielsweise im Bereich von 10 msec bis 20 msec, ist für das Beispiel nach Figur 3 der Sensor B50 nicht mehr aktiviert (auf logisch High-Pegel), so dass das Eins-Logigsignal bei 1 e im dritten Diagramm von unten auf logisch Eins verbleibt, und zwar sowohl bei Eingang A10, wie dargestellt, als auch bei Ausgang A20. Ausgehend von dieser Signallage wird nach Ende der Ausblendzeit T3, nach Ablauf der Verzögerungszeit T1 und nach Ablauf der Ausblendzeit T5 der Antrieb A freigegeben.

Das oben inhärent mit-beschriebene Beispiel, dass Sensor B weiterhin aktiviert bleibt, ist in der zweiten Hälfte des Diagramms der Figur 3 nach einem Übergangsabschnitt zur Anpassung der Ausgangssituation veranschaulicht. Unter Berücksichtigung der Signalverläufe der vorigen Diagramme ist dieser Abschnitt eigentlich selbsterklärend. Hilfestellung gibt folgender Rahmen.

Im rechten Teil des zweiten, grau unterlegten Abschnitts des Diagramms nach Figur 3 bleibt der Sensor B50 auch nach der Quittierung q(t) und T3 aktiviert, bei (2a). Daher geht der Eingang A10 über die Schaltung C nach einem Bruchteil der Gesamtlaufzeit T0 auf logisch Null. Die - zuvor übersteuerte - Meldung auf A20 wird nach der Eigenlaufzeit von Schaltung A wieder auf Null zurückgesetzt, bei (2c). Damit bleibt der Antrieb A auch nach der Quittierung ausgeschaltet, veranschaulicht durch das Signal "Sicheres Stillsetzen" = Null". T5 war dabei größer als alle Laufzeiten zusammen.

Dadurch ist gezeigt, das unterschiedlichen logische Zustände, die Wartelage (High) und Sicherheitslage (Abschaltlage, Low) richtig verwaltet werden, eindeutig ineinander übergeführt werden und während der Zeiträume der Überführung, des Einschaltens oder Abschaltens, indifferenten und gefährliche Zustände vermieden werden, die zu den vielen Antrieben unterschiedliche Signale vermitteln könnten, so dass sich die Antriebe, welche mechanisch gekoppelt sein können, wirklich gleich verhalten.

Die Zeiten, welche unten in einer Übersicht dargestellt werden, sind auf einen schnellen Antrieb mit ansteuerndem Umrichter bezogen.

| Übersicht | | |
|---|---|---|
| Zeitart | Größenordnung der Zeitart | Anmerkung |
| T0 (ganzer Ring) | < 60 nsec bei drei Teilnehmern im Ring mittelschnelle Logik | |
| | | |
| T1 (Ansprechen) | > 1 msec, ist größer T2a | |
| | | |
| T2a (Test Peaks) | zwischen 500 µsec | |
| T2b | und 1 msec | |
| | | |
| T3 | 20 msec sehr viel größer als T0 | |
| | | |
| T4 | >10 msec, kann auch >100 msec sein | |
| | | |
| T5 | 5 msec wesentlich größer als T0 | |
| | | |
| T6 | zwischen 100 msec und 30 sec stark applikationsspezifisch | |

## Patentansprüche

1. Sicherheitsschaltung zur sicheren Überwachung von mehreren Steuergeräten (AA, AB, AC) der Leistungselektronik,
wobei die Sicherheitsschaltung einen Sicherheitsbereich (A33) und einen Logikabschnitt (A30) enthält und dazu eingerichtet ist, als Teilnehmer in einer Ringstruktur mit anderen Teilnehmern verbunden zu werden über einen mehrkanaligen Signalpfad mit zumindest zwei parallelen, aber eigenständigen Signalleitungen,
wobei die Ringstruktur
- einen metastabilen Wartezustand annimmt, wenn alle Leitungsabschnitte zwischen den Sicherheitsschaltungen sich auf logischem Pegel Eins befinden, wobei dieser Zustand als normaler logischer Einschaltpegel keinen Fehlerfall und keinen Ausschaltfall symbolisiert, und
- eine stabile Sicherheitslage **dadurch** anzeigt, dass alle mehrkanaligen Signalleitungen sich auf logischem Pegel Null befinden
wobei der Logikabschnitt (A30) eine Ausgangsschaltung (A40) und einen mehrkanaligen Ausgang (A20) zur Kopplung an eine folgende Sicherheitsschaltung und einen mehrkanaligen Eingang (A10) zur Kopplung an eine vorgelagerte Sicherheitsschaltung enthält und dazu eingerichtet ist, einen logischen Pegel Null an allen Eingangs-Signalleitungen (a10a, a10b) der Sicherheitsschaltung praktisch verzögerungsfrei an den mehrkanaligen Ausgang (A20) durchzureichen,
wobei der Sicherheitsbereich (A33) mit einer Schaltverzögerung (T1) arbeitet und dazu eingerichtet ist, den mehrkanaligen Eingang (a10a, a10b) der Sicherheitsschaltung zu beobachten, und über den Logikabschnitt (A30) einen logischen Pegel Null an dem mehrkanaligen Ausgang (A20) zu erzeugen,
wenn dem Sicherheitsbereich (A33) ein Sicherheits-Abschaltsignal von einem zugeordneten Steuergerät oder einer ihm zugeordneten Peripherie (A50) eingekoppelt wird
oder wenn der Sicherheitsbereich (A33) eine Unsymmetrie des Pegels zwischen den Kanälen des mehrkanaligen Eingangs (A10) erkennt, die länger als die Schaltverzögerung (T1) dauert.

2. Verfahren zur sicheren Überwachung von mehreren Steuergeräten (AA, AB, AC) der Leistungselektronik mit einer Sicherheitsschaltung,
wobei die Sicherheitsschaltung einen Sicherheitsbereich (A33) und einen Logikabschnitt (A30) enthält und dazu eingerichtet ist, als Teilnehmer in einer Ringstruktur mit anderen Teilnehmern verbunden zu werden über einen mehrkanaligen Signalpfad mit zumindest zwei parallelen, aber eigenständigen Signalleitungen,
wobei die Ringstruktur
- einen metastabilen Wartezustand annimmt, wenn alle Leitungsabschnitte zwischen den Sicherheitsschaltungen sich auf logischem Pegel Eins befinden, wobei dieser Zustand als normaler logischer Einschaltpegel keinen Fehlerfall und keinen Ausschaltfall symbolisiert, und
- eine stabile Sicherheitslage **dadurch** anzeigt, dass alle mehrkanaligen Signalleitungen sich auf logischem Pegel Null befinden
wobei der Logikabschnitt (A30) eine Ausgangsschaltung (A40) und einen mehrkanaligen Ausgang (A20) zur Kopplung an eine folgende Sicherheitsschaltung und einen mehrkanaligen Eingang (A10) zur Kopplung an eine vorgelagerte Sicherheitsschaltung enthält
mit folgenden Verfahrensschritten:
der Logikabschnitt reicht einen logischen Pegel Null an allen Eingangs-Signalleitungen (a10a, a10b) der Sicherheitsschaltung praktisch verzögerungsfrei an den mehrkanaligen Ausgang (A20) durch,
der Sicherheitsbereich (A33) arbeitet mit einer Schaltverzögerung (T1), beobachtet den mehrkanaligen Eingang (a10a, a10b) der Sicherheitsschaltung und erzeugt über den Logikabschnitt (A30) einen logischen Pegel Null an dem mehrkanaligen Ausgang (A20),
wenn dem Sicherheitsbereich (A33) ein Sicherheits-Abschaltsignal von einem zugeordneten Steuergerät oder einer ihm zugeordneten Peripherie (A50) eingekoppelt wird
oder wenn der Sicherheitsbereich (A33) eine Unsymmetrie des Pegels zwischen den Kanälen des mehrkanaligen Eingangs (A10) erkennt, die länger als die Schaltverzögerung (T1) dauert.

## Claims

1. Safety circuit for safe monitoring of several control devices (AA, AB, AC) of power electronics, wherein the safety circuit contains a safety region (A33) and a logic section (A30) and is equipped to be connected to further users as a user in a ring structure via a multi-channel signal path having at least two parallel, but stand-alone signal lines, wherein the ring structure
- adopts a metastable disconnected mode when all line sections between the safety circuits are at logic level one, wherein this mode as a normal logic turn-on level does not symbolise an error case and does not symbolise a turn-off case, and
- indicates a stable safety position in that all multi-channel signal lines are at logic level zero
wherein the logic section (A30) contains an output circuit (A40) and a multi-channel output (A20) for coupling to a following safety circuit and a multi-channel input (A10) for coupling to an upstream safety circuit and is equipped to pass a logic level zero at all input signal lines (a10a, a10b) of the safety circuit virtually without delay to the multi-channel output (A20),
wherein the safety region (A33) operates with a switch delay (T1) and is equipped to observe the multi-channel input (a10a, a10b) of the safety circuit, and to produce via the logic section (A30) a logic level zero at the multi-channel output (A20) when a safety disconnect signal from an assigned control device or peripheral equipment (A50) assigned to it, is coupled to the safety region (A33) or when the safety region (A33) detects imbalance of the level between the channels of the multi-channel input (A10) which lasts longer than the switch delay (T1).

2. Method for safe monitoring of several control devices (AA, AB, AC) of power electronics with a safety circuit, wherein the safety circuit contains a safety region (A33) and a logic section (A30) and is equipped to be connected to further users as a user in a ring structure via a multi-channel signal path having at least two parallel, but stand-alone signal lines, wherein the ring structure
- adopts a metastable disconnected mode when all line sections between the safety circuits are at logic level one, wherein this mode as a normal logic turn-on level does not symbolise an error case and does not symbolise a turn-off case, and
- indicates a stable safety position in that all multi-channel signal lines are at logic level zero
wherein the logic section (A30) contains an output circuit (A40) and a multi-channel output (A20) for coupling to a following safety circuit and a multi-channel input (A10) for coupling to an upstream safety circuit
having the following method steps:
the logic section passes a logic level zero at all input signal lines (a10a, a10b) of the safety circuit virtually without delay to the multi-channel output (A20),
the safety region (A33) operates with a switch delay (T1), observes the multi-channel input (a10a, a10b) of the safety circuit and produces via the logic section (A30) a logic level zero at the multi-channel output (A20) when a safety disconnect signal from an assigned control device or peripheral equipment (A50) assigned to it, is coupled to the safety region (A33) or when the safety region (A33) detects imbalance of the level between the channels of the multi-channel input (A 10) which lasts longer than the switch delay (T1).

## Revendications

1. Circuit de protection pour la surveillance en sécurité de plusieurs appareils de commande (AA, AB, AC) d'électronique de puissance,
dans lequel le circuit de protection comprend une zone de protection (A33) et une zone logique (A30), et est construit pour être relié, en tant qu'usager, à d'autres usagers dans une structure annulaire au moyen d'un chemin de signal à canaux multiples avec au moins deux lignes de signalisation parallèles mais autonomes,
dans lequel la structure annulaire
- prend un état d'attente métastable, lorsque toutes les parties de ligne entre les circuits de protection se trouvent au niveau logique Un, dans lequel cet état est le niveau de commutation logique normal qui ne symbolise aucun cas de défaut et aucun cas de coupure, et
- affiche une position de protection stable du fait que toutes les lignes de signalisation à canaux multiples se trouvent au niveau logique Zéro,
dans lequel la zone logique (A30) comprend un circuit de sortie (A40) et une sortie à canaux multiples (A20) pour le couplage à un circuit de protection suivant et une entrée à canaux multiples (A10) pour le couplage à un circuit de protection précédent et est construite pour transmettre un niveau logique Zéro présent sur toutes les lignes de signalisation d'entrée (a10a, a10b) du circuit de protection pratiquement sans retard à la sortie à canaux multiples (A20),
dans lequel la zone de protection (A33) travaille avec un retard de commutation (T1) et est construite pour observer l'entrée à canaux multiples (a10a, a10b) du circuit de protection, et pour produire un niveau logique Zéro à la sortie à canaux multiples (A20) au moyen de la zone logique (A30),
lorsqu'un signal de coupure de protection est couplé dans la zone de protection (A33) par un appareil de commande associé ou par un périphérique (A50) associé à celui-ci, ou
lorsque la zone de protection (A33) reconnaît entre les canaux de l'entrée à canaux multiples (A10) une asymétrie de niveau qui dure plus longtemps que le retard de commutation (T1).

2. Procédé pour la surveillance en sécurité de plusieurs appareils de commande (AA, AB, AC) d'électronique de puissance avec un circuit de protection,
dans lequel le circuit de protection comprend une zone de protection (A33) et une zone logique (A30), et est construit pour être relié, en tant qu'usager, à d'autres usagers dans une structure annulaire au moyen d'un chemin de signal à canaux multiples avec au moins deux lignes de signalisation parallèles mais autonomes,
dans lequel la structure annulaire
- prend un état d'attente métastable, lorsque toutes les parties de ligne entre les circuits de protection se trouvent au niveau logique Un, dans lequel cet état est le niveau de commutation logique normal qui ne symbolise aucun cas de défaut et aucun cas de coupure, et
- affiche une position de protection stable du fait que toutes les lignes de signalisation à canaux multiples se trouvent au niveau logique Zéro,
dans lequel la zone logique (A30) comprend un circuit de sortie (A40) et une sortie à canaux multiples (A20) pour le couplage à un circuit de protection suivant et une entrée à canaux multiples (A10) pour le couplage à un circuit de protection précédent,
comprenant les opérations suivantes:
la zone logique transmet un niveau logique Zéro présent sur toutes les lignes de signalisation d'entrée (a10a, a10b) du circuit de protection pratiquement sans retard à la sortie à canaux multiples (A20),
la zone de protection (A33) travaille avec un retard de commutation (T1), observe l'entrée à canaux multiples (a10a, a10b) du circuit de protection et produit un niveau logique Zéro à la sortie à canaux multiples (A20) au moyen de la zone logique (A30),
lorsqu'un signal de coupure de protection est couplé dans la zone de protection (A33) par un appareil de commande associé ou par un périphérique (A50) associé à celui-ci, ou
lorsque la zone de protection (A33) reconnaît entre les canaux de l'entrée à canaux multiples (A10) une asymétrie de niveau qui dure plus longtemps que le retard de commutation (T1).
